# EUROPEAN PATENT APPLICATION

(11) **EP 1 909 499 A1**
(43) Date of publication of application: **09.04.2008**
(21) Application number: 06781280.0
(22) Date of filing: 13.07.2006
(51) Int. Cl.: H04N 7/173, H04N 5/445

(54) **DIGITAL BROADCAST RECEIVING APPARATUS AND PROGRAM DISPLAY METHOD**

(30) Priority: 22.07.2005 JP 2005212391
(71) Applicant: FUJITSU TEN LIMITED, Kobe-shi Hyogo 652-8510 (JP)
(72) Inventor: KAMIYA, Masahiro, c/o FUJITSU TEN LIMITED, Kobe-shi, Hyogo 652-8510 (JP)
(74) Representative: Skone James, Robert Edmund
(86) International application number: PCT/JP2006/314313
(87) International publication number: WO 2007/010952

(57) **Abstract**

The invention is directed to the provision of a digital broadcast receiving apparatus that presents the details of a plurality of content for viewing before a user performs a content switching (determining) operation, and thereby enables the user to precheck the details of the plurality of contents by a simple operation and start viewing the desired content quickly. The receiving apparatus includes a display for displaying content by receiving data broadcast, list displaying means for displaying content items in the form of a list, a preview displaying section for displaying the content simultaneously with preview content, a preview switching section for switching the display of the preview content to destination content associated with an item selected by a pointer as the pointer is moved over the content items, and a display control section for displaying a preview of destination content associated with an item located adjacent to the item selected by the pointer.

## Description

### TECHNICAL FIELD OF THE INVENTION

The present invention relates to a digital broadcast receiving apparatus which provides content for viewing by receiving broadcast data.

### BACKGROUND OF THE INVENTION

In recent years, as information technology develops, digital broadcasting systems using satellite, terrestrial, cable, and other transmission media have been rapidly becoming more advanced. As broadcast content is delivered in the form of digital information, viewers can receive and use high-quality multimedia information.

Through such digital broadcasting, viewers can receive a data broadcast or access a two-way service, in addition to receiving a high-definition television broadcast providing high quality sound as well as high picture quality, and can even search for television programs by using an EPG (Electronic Program Guide).

In a data broadcast, information such as traffic conditions, weather forecasts, sports results, etc., can be displayed using images and characters, separately from normal television programs being broadcast at the same time. In a two-way service, a viewer can, for example, participate in a TV quiz show, TV shop, or make payments by bank transfer, i.e., a viewer can use two-way services through a digital broadcast receives. Further, using a remote control, a viewer can easily select a desired program for viewing or recording from the EPG displayed on the television screen. A viewer can also select, for example, from a chosen genre, a drama, news, or other program he would like to view, or search for information.

In this way, through digital broadcasting, a user can select or search for desired content on a display screen, and can use the selected content.

Traditionally, in digital broadcasting, content searching has been done by a user who is actually operating an operation key and moving a pointer to each item in the content list displayed on the screen, thereby selecting its associated content and thus having the details of the content displayed on the screen. However, since this involves a time-consuming process requiring the user to check the details of each content one after another until the desired content is found, there has been the problem that it takes a great deal of time before the user can view the desired content.

In view of this, various techniques have been proposed whereby, when checking content details, a user can understand the entire hierarchical structure of the content by a simple operation without having to switch the hierarchical level of the content back and forth repeatedly.

In patent document 1, a technique is proposed in which, when an option at the first hierarchical level is selected that includes a guide function for acquiring information from an external device, the second hierarchical level comprising a plurality of options including the guide function is displayed in place of the first hierarchical level, along with the third hierarchical level (to be displayed upon selection of an option at the second hierarchical level) which comprises a plurality of pieces of information content corresponding to the selected option at the second hierarchical level.

More specifically, the current screen is displayed in the right-hand half of the screen by horizontally shrinking it by one-half its original size, and while viewing the current screen, the user can select the screen at the third hierarchical level displayed in the left-hand half of the screen. For example, while viewing a drama on the current screen, the user can select a channel at the third hierarchical level, or while viewing a sports broadcast on the current screen, the user can select a channel at the third hierarchical level and view it in a split screen.

On the other hand, in patent document 2, an electronic apparatus is described which, when a news guide option at the first hierarchical level is selected, displays, in place of the first hierarchical level, the second hierarchical level comprising a category of teletext simultaneously with the third hierarchical level comprising a plurality of contents contained in the category of teletext at the second hierarchical level.

Further, in patent document 3, a receiving apparatus is described which, when a channel change is made, displays for a predetermined period of time an image produced by combining an image from the first channel before the channel change and an image from the second channel after the channel change.

Patent document 4 discloses a portable information processing apparatus which detects the direction of rotation of a jog dial switch and the amount of rotation as well as the depression thereof, associates the detection results of the direction of rotation and the amount of rotation with an operation for moving the focus on the LCD, and performs an apparatus operation in accordance with this association while changing the association accordingly. In particular, patent document 4 describes that when there is a lower level menu under the currently focused menu item, the lower level menu is displayed.

Patent document 1: Japanese Unexamined Patent Publication No. H11-150692

Patent document 2: Japanese Unexamined Patent Publication No. H11-150693

Patent document 3: Japanese Unexamined Patent Publication No. 2002-077764

Patent document 4: Japanese Unexamined Patent Publication No. 2000-353045

### SUMMARY OF THE INVENTION

Generally, in digital broadcasting, when a user searches for content by operating an operation key and moving the cursor over the items in the content list displayed on the screen, the user can only shift the cursor by one item at a time in a horizontal or vertical direction. Accordingly, when there are many items in the content list, the user has to shift the cursor many times to check the details of the many pieces of content which not only makes the whole task very laborious, but requires a great deal of time to select the desired content.

Further, in a situation where the desired content has to be selected within a limited time during driving, as in the case of a vehicle-mounted apparatus or the like, there is a need to simplify the content selection operation.

The present invention has been devised in view of the above problem, and an object of the invention is to provide a digital broadcast receiving apparatus that presents the details of a plurality of contents for viewing before the user performs a content switching (determining) operation, and thereby enables the user to precheck the details of the plurality of contents by a simple operation and to start the viewing of the desired content quickly.

A receiving apparatus according to the present invention includes a display for displaying content by receiving data broadcast, list displaying means for displaying content items in the form of a list, a preview displaying section for displaying preview content on a screen on which the content is displayed, a preview switching section for switching the display of the preview content to destination content associated with an item selected by a pointer as the pointer is moved over the content items, and a display control section for displaying a preview of destination content associated with an item located near the item selected by the pointer. In this way, the user can precheck the details of a plurality of contents by a simple operation and can thus start viewing the desired content quickly.

Preferably, in the receiving apparatus according to the present invention, the content and the preview content are displayed simultaneously. This enables the user to select another content while viewing the current content.

In the receiving apparatus according to the present invention, it is also preferable to switch the display of the preview content after a predetermined time has elapsed after the movement of the pointer is detected. With this arrangement, when the user operates buttons quickly, the pointer moves from one content item to the next before the drawing of the preview is completed; this serves to reduce the processing load for drawing, i.e., the load of the presentation processing unit.

Preferably, the receiving apparatus according to the present invention further includes a storing section for storing URI of the preview content, a reading section for reading out the stored URI, and a switching section for switching the display of the content to the content that matches the readout URI. In this configuration, the user can read out the stored URI of the preview content, and can thus quickly bring the desired content onto the screen for viewing by selecting it from the preview.

In the receiving apparatus according to the present invention, it is preferable to perform automatic preview control in which the pointer is automatically moved over an entire movable range of the pointer and the display of the preview content is automatically switched from one content to another in synchronism with the automatic movement of the pointer. With this automatic preview control that switches the display of the preview content from one content to another, the user can display the preview one after another by a single button operation.

### BRIEF DESCRIPTION OF THE DRAWINGS

Figure 1 is a block diagram showing an overview of a digital broadcast receiving apparatus according to the present invention.
Figure 2 is a diagram showing one example of a remote control.
Figure 3 is a diagram showing an example of a screen display on which currently presented content is displayed along with preview content.
Figure 4 is a diagram showing how the preview content changes as focus is moved.
Figure 5 is a diagram showing one example of a screen display presenting a GUI for operating the preview content.
Figure 6 is a diagram showing another example of a screen display presenting a GUI for operating the preview content.
Figure 7 is a diagram showing a first embodiment of the present invention.
Figure 8 is a diagram showing a second embodiment of the present invention.

### DETAILED DESCRIPTION OF THE PREFERRED EMBODIMENT

Embodiments of the present invention will be described below with reference to the accompanying drawings.

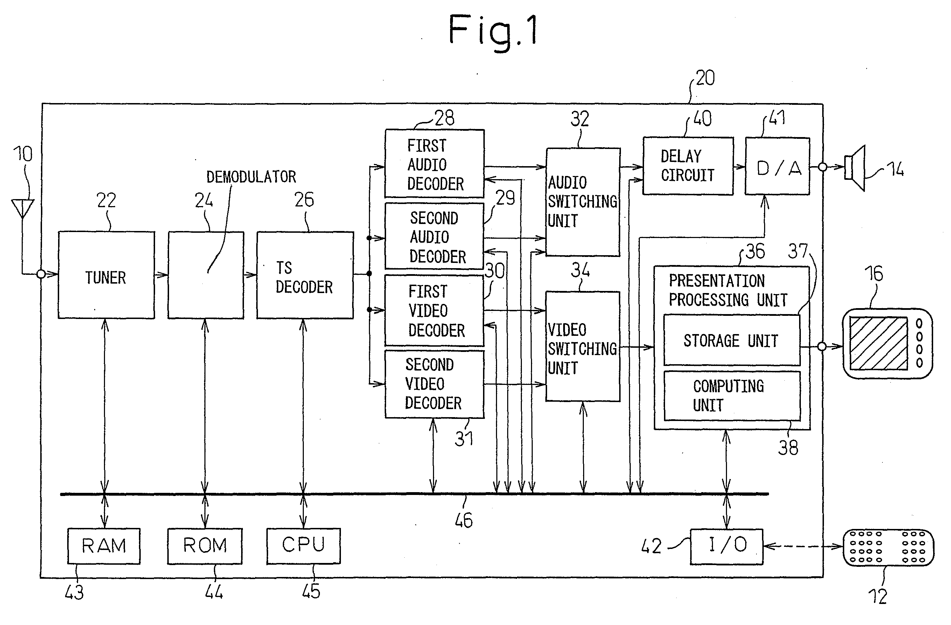

Referring to Figure 1, a digital broadcast receiving apparatus 20 comprises a tuner 22, a demodulator 24, a TS decoder, a first audio decoder 28, a second audio decoder 29, a first video decoder 30, a second video decoder 31, an audio switching unit 32, a video switching unit 34, a presentation processing unit 36, a delay circuit 40, a D/A converter 41, an I/O (Input/Output) adapter 42, a RAM (Random Access Memory) 43, a ROM (Read Only Memory) 44, a CPU (Central Processing Unit) 45, and a system bus 46.
An antenna 10, a remote control 12, a speaker 14, and a display 16 are connected to digital broadcast receiving apparatus 20.

Digital broadcast receiving apparatus 20 is controlled by input operations from various kinds of input devices (buttons, touch panel, etc.) provided on remote control 12 and/or display 16, and digital broadcast receiving apparatus 20 may be configured so as to include one or more of antenna 10, display 16, speaker 14, and remote control 12.

The tuner 22 receives broadcast radio waves via the antenna 10, extracts a digital signal carried in a designated band, and passes it to the demodulator 24 after adjusting the signal level by a built-in AGC (Automatic Gain Control) circuit. The digital signal is controlled to a desired level by an AGC signal. The tuner 22 sends the AGC signal to the CPU 45 via the system bus 46. The CPU 45 can judge the reception sensitivity by the voltage value of the AGC signal.

The demodulator 24 demodulates the digitally modulated signal. Then, after applying error correction, etc., the demodulator 24 passes the TS (Transport Stream) packet signal to the TS decoder 26. At the same time, the demodulator 24 sends transport errors (TS-ERRs) A, B, and C to the CPU 45 via the system bus 46. TS-ERR A indicates an error in mobile broadcasting, and TS-ERR B or C an error in fixed broadcasting.

The TS decoder 26 filters (sorts out) the TS packet signal, and sends only necessary data to the corresponding decoders. More specifically, coded digital data for fixed digital broadcasting (for home reception) is separated into audio and video, which are sent to the first audio decoder 28 and the first video decoder 30, respectively. On the other hand, coded digital data for mobile digital broadcasting is separated into audio and video, which are sent to the second audio decoder 29 and the second video decoder 31, respectively. At the same time, the TS decoder 26 sends a data decode error signal for fixed broadcasting and a data decode error signal for mobile broadcasting to the CPU 45 via the system bus 46. Further, the TS decoder 26 acquires PSI (Program Specific Information) data or SI (Service Information, or program arrangement information) from the TS packet signal, and sends it to the CPU 45 via the system bus 46.

In the present embodiment, since two kinds of coded digital data are handled, two audio/video decoder pairs are provided, i.e., the first audio decoder and video decoder and the second audio decoder and video decoder, but the invention is not limited to this particular arrangement, and only one audio/video decoder pair may be provided. Further, in OFDM, for example, since three signal carriers can be transmitted simultaneously, a maximum of three kinds of video data can be separated from the TS decoder 26. Accordingly, a third audio decoder and a third video decoder may also be provided.

The first audio decoder 28 and the first video decoder 30 decode the coded digital data bit stream received from the TS decoder 26, and generate first audio data for audio output and first video data for display for fixed broadcasting. Likewise, the second audio decoder 29 and the second video decoder 31 decode the coded digital data bit stream received from the TS decoder 26, and generate second audio data for audio output and second video data for display for mobile broadcasting.

One or the other of the first and second audio data output from the first and second audio decoders 28 and 29 is selected by the audio switching unit 32 under the control of the CPU 45 and, after introducing a prescribed delay by the delay circuit 40 for synchronization to the video data, the audio data is converted by the D/A converter 41 into an analog signal which is output from the speaker 14.

One or the other of the first and second video data output from the first and second video decoders 30 and 31 is selected by the video switching unit 34 under the control of the CPU 45 and, after prescribed computations to be described later are performed in the presentation processing unit 36, the video data is presented for viewing on the display 16.

The presentation processing unit 36 is a processing unit for displaying the selected video data for fixed broadcasting or mobile broadcasting by processing the data to match the display 16, and includes a storage unit 37 such as a VRAM for temporarily storing the video data, and a computing unit 38 for performing computations, including interpolation and substitution, to generate, for example, still image data (frozen image data), etc. from the first video data or the second video data, as will be described later.

The CPU 45 operates in collaboration with the RAM 43 and ROM 44 in accordance with preinstalled programs and controls the various elements connected via the system bus 46. Further, the CPU 45 receives the AGC signal from the tuner 22, the TS-ERRs A and B (or C) from the demodulator 24, the decode error signals from the TS decoder 26, or motion vector error signals from the first and second video decoders 30 and 31, determines based on all or some of the signals whether the data for fixed broadcasting and the data for mobile broadcasting can be received or not, and switches the display, for example, from video data to still image data.

In data broadcast, moving images and still images are typically encoded by PNG or JPEG, and moving images are typically encoded by MPEG2 or MNG. The display positions and sizes of such moving images and still images are defined in a BML (Broadcast Markup Language) document and stored in the RAM 43.

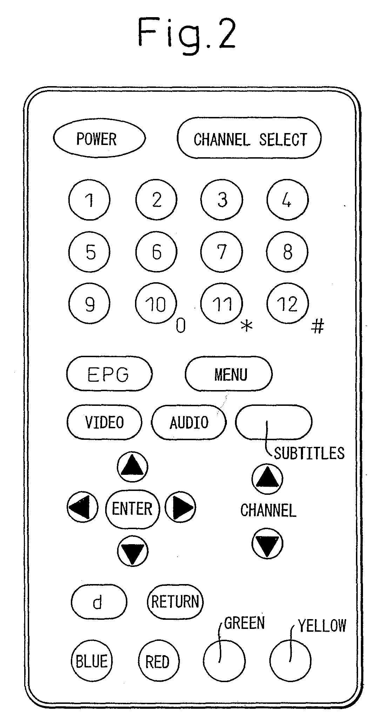

Figure 2 is a diagram showing one example of the remote control 12. As shown, in data broadcast, a "d" button, a "RETURN" button, an "ENTER" button, color buttons (blue, red, green, yellow), etc., are used as well as numeric keys and up/down and left/right arrow buttons (cursor buttons).

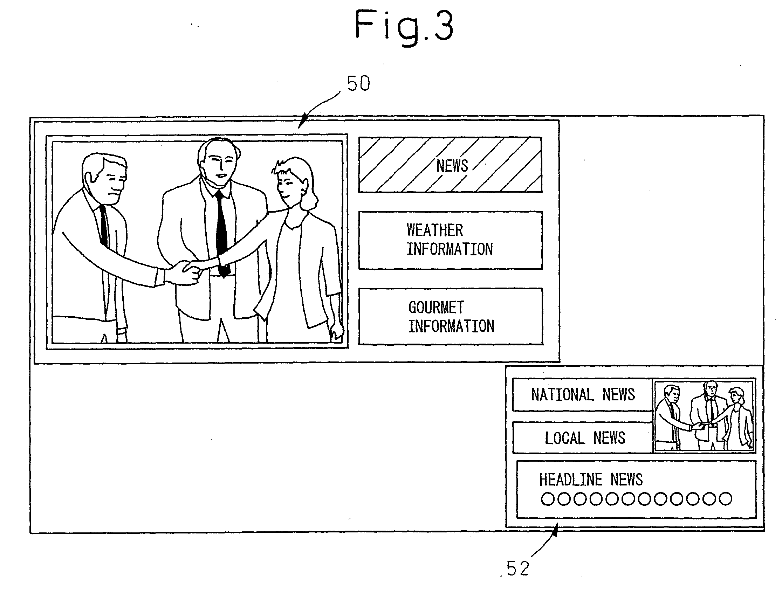

Figure 3 is a diagram explaining an example of a screen display on which currently presented content is displayed along with preview content. As shown, the currently presented content 50 is displayed on the display 16 simultaneously with the preview content 52. The preview content 52 shows the destination content that is displayed when a focused content item (p element or object element in the BML document) is selected in the currently presented content, i.e., when the ENTER button is pressed on the remote control. Here, "focused" means that the pointer for selecting content is placed over the content item. In this case, it is desirable that the content item where the pointer is positioned be highlighted, for example, by changing the color, enlarging the characters, or illuminating or flashing the selected item.

In the example of Figure 3, since the item "NEWS" is focused, the destination content to be effected when the item "NEWS" is selected is displayed as the preview content 52. In the BML document, the p element is an element for displaying text, the object element is an element for displaying monomedia.

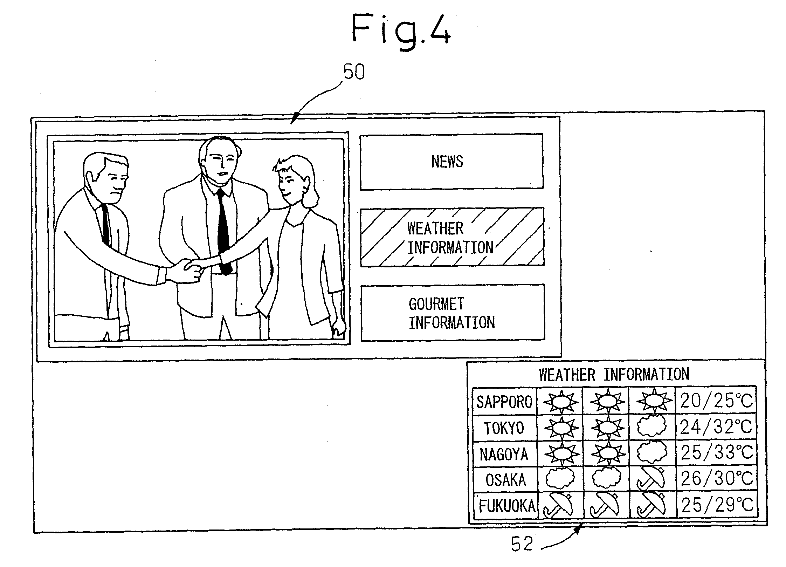

Figure 4 is a diagram explaining how the preview content changes as the focus is moved. When the focus is moved from the item "NEWS" to the item "WEATHER INFORMATION" as shown in Figure 4 by pressing an arrow key on the remote control 12 from the condition shown in Figure 3, the destination content to be effected when the newly focused item "WEATHER INFORMATION" is selected is displayed as the preview content 52.

To accomplish this, the CPU 45 performs control to switch the display of the preview content to the destination content to be effected when the focused item is selected (determined) as the focus is moved over the items displayed on the currently presented content.

If provisions are made to start the drawing of the preview the moment that the pointer is moved, the processing load for drawing greatly increases in such cases as when the user operates buttons quickly. It is therefore preferable that provisions be made to switch the display of the preview content after a predetermined time has elapsed after the movement of the focus is detected.

More specifically, the CPU 45 performs control in accordance with the following steps (1) to (3).
(1) Detect movement of focus.
(2) Activate timer.
(3) Switch preview content after time-out has occurred.

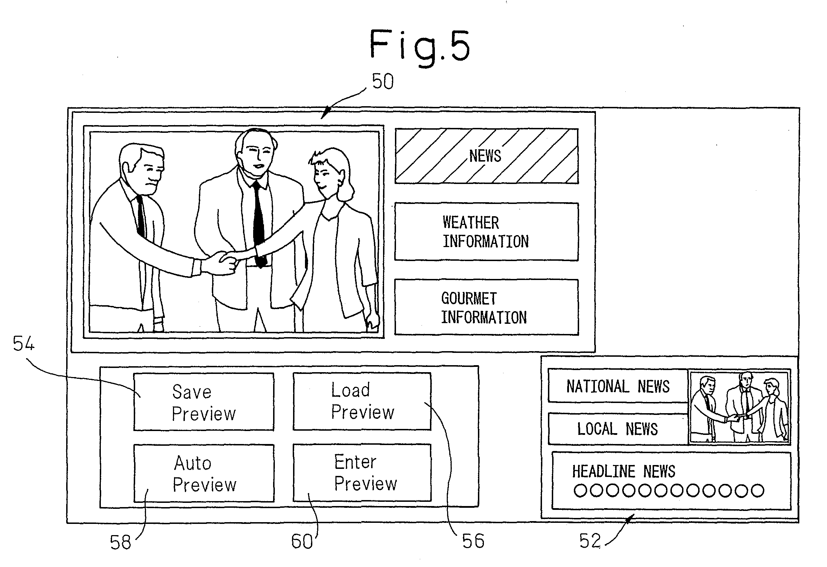

Figure 5 is a diagram showing one example of a screen display presenting a GUI (Graphical User Interface) for operating the preview content. In this example, a "Save Preview" button 54 for saving the URI (Uniform Resource Identifier) of the preview content into the RAM 43 is provided on the touch panel screen or the remote control. When the depression of the "Save Preview" button 54 is detected, the CPU 45 acquires the URI of the current preview content from the BML document and stores it in the RAM 43.

Further, in the example of Figure 5, a "Load Preview" button 56 for reading out the URI stored in the RAM 43 is provided on the touch panel screen or the remote control. When the depression of the "Load Preview" button 56 is detected, the CPU 45 reads out the URI stored in the RAM 43, and switches the display of the currently displayed content to the content that matches the thus readout URI. In this way, the user can quickly bring the desired content onto the screen for viewing by selecting it from the preview.

Further, in the example of Figure 5, an "Auto Preview" button 58 for switching the preview content automatically as the focus is moved is provided on the touch panel screen or the remote control. When the depression of the "Auto Preview" button 58 is detected, the CPU 45 sequentially focuses the focusable content items. Then, the CPU 45 switches the preview content after the focus is moved. Here, detection of a focusable button is accomplished by determining whether it is an element given a nav-index property in the BML document.

In this way, by effecting the automatic preview in which the display of the preview content is automatically switched from one content to another in sequence as the focus is automatically moved over the entire movable range, the user can display the preview one after another by a single button operation.

Further, in the example of Figure 5, an "Enter Preview" button 60 for switching to the content currently displayed in the automatic preview is provided on the touch panel screen or the remote control. When the depression of the "Enter Preview" button 60 is detected while the display of the preview content is being sequentially switched by the automatic preview, the CPU 45 performs processing to switch the display of the currently presented content to the currently displayed preview content. In this way, the user can quickly bring the desired content onto the screen for viewing by selecting it from the preview.

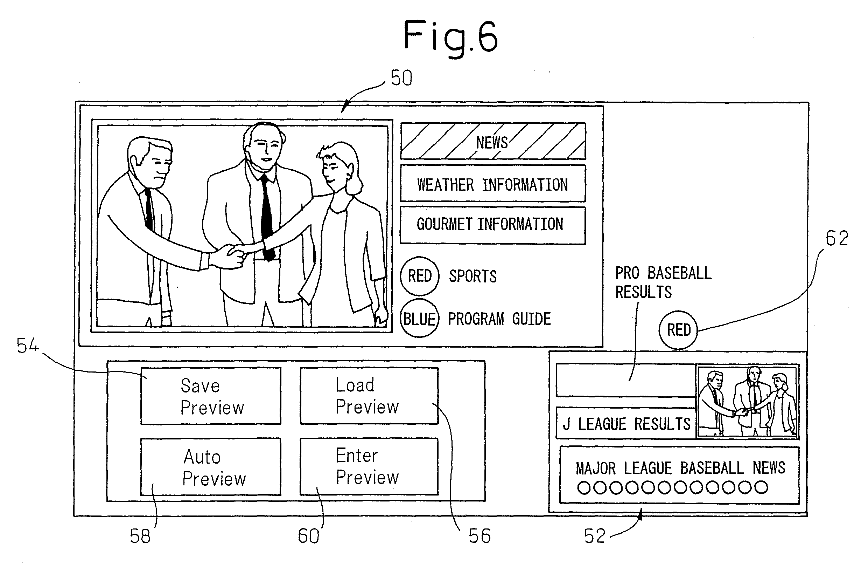

Figure 6 is a diagram showing another example of a screen display presenting a GUI for operating the preview content. There are cases where a button for switching the display of the currently presented content without moving the focus is provided. In such cases, it is preferable to switch the display of the preview content in the automatic preview from one content to another including the destination content to be effected by operating such a button.

More specifically, when the depression of the "Auto Preview" button 58 is detected, the CPU 45 detects a button capable of content switching from among the "d" button, the color buttons (red, blue, yellow, green), etc. Then, the CPU 45 sets the detected button as a target for the content preview in addition to the focusable items.

In the example of Figure 6, the red and blue buttons are shown as the buttons capable of content switching. The destination contents to be effected by the red and blue buttons are also set as the contents to be automatically previewed. In the example of Figure 6, the button ("red") 62 for effecting the switching is shown near the preview content.

In the example of Figure 6 also, the "Enter Preview" button 60 for switching to the content currently displayed in the automatic preview is provided. Then, as earlier described, when the depression of the "Enter Preview" button 60 is detected while the display of the preview content is being sequentially switched by the automatic preview, the CPU 45 performs processing to switch the display of the currently presented content to the currently displayed preview content.

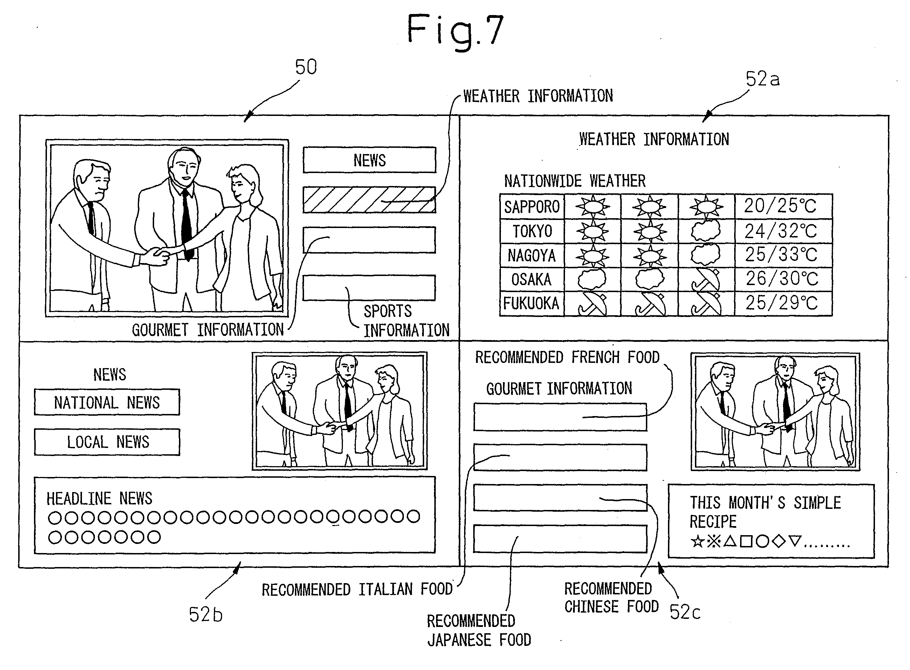

Figure 7 is a diagram showing a first embodiment of the present invention. In this embodiment, the content corresponding to the currently focused item is displayed in split screen form along with the contents corresponding to the items located above and below the focused item. More specifically, the currently presented content 50 corresponding to the item "SPORTS INFORMATION" is displayed along with the preview content 52a corresponding to the focused item "WEATHER INFORMATION" among the content items displayed in the currently presented content 50. In addition to them, the contents corresponding to the "NEWS" button and the "GOURMET INFORMATION" button respectively located before and after the item "WEATHER INFORMATION" are also displayed in split screen form as preview content 52b and preview content 52c, respectively. According to such preview content display, the user can precheck the details of a plurality of contents by a simple operation and can thus start the viewing of the desired content quickly.

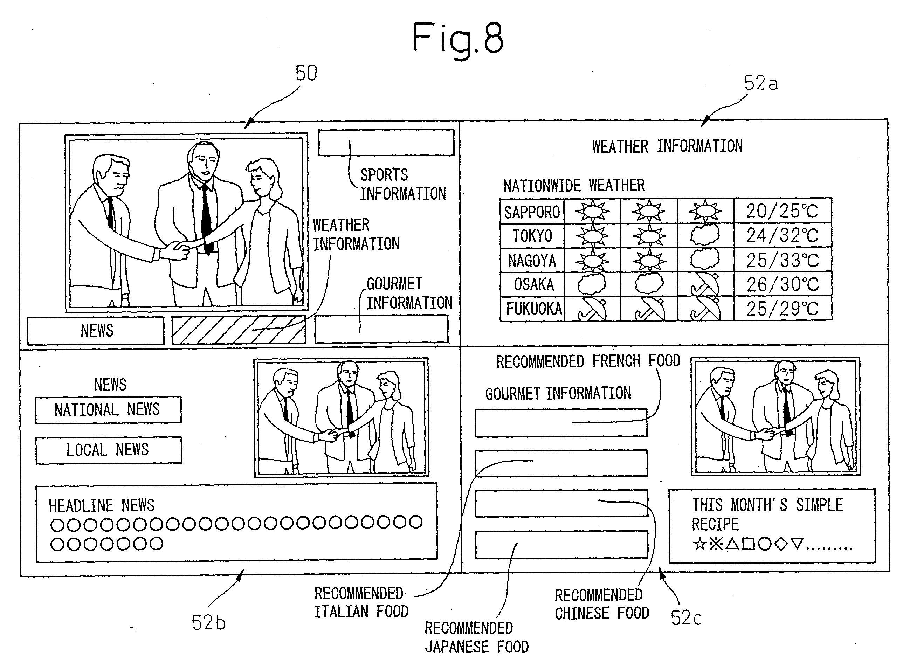

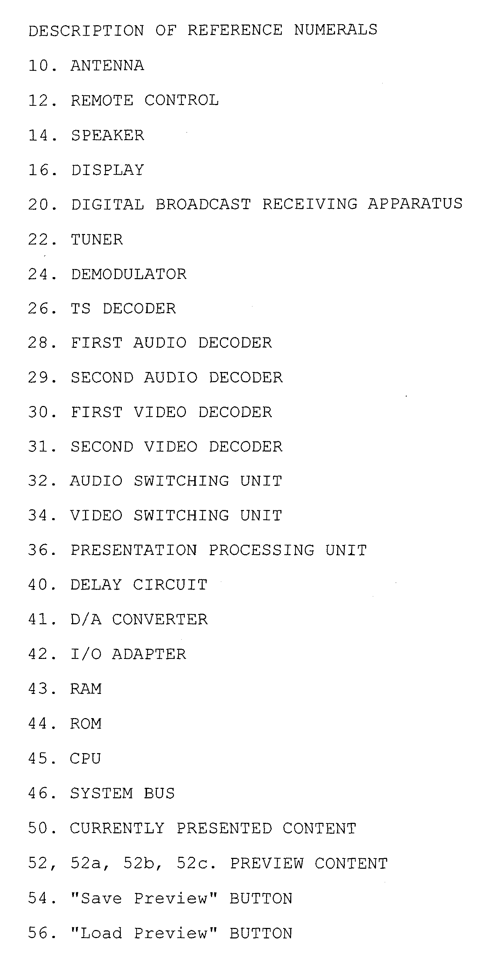

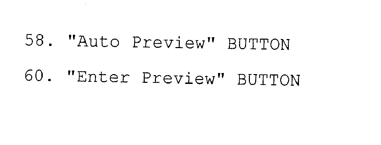

Figure 8 is a diagram showing a second embodiment of the present invention. In this embodiment, the content corresponding to the currently focused item is displayed in split screen form along with the contents corresponding to the items located to the left and right of the focused item, as opposed to the first embodiment in which the content corresponding to the currently focused item was displayed in split screen form along with the contents corresponding to the items located above and below the focused item. More specifically, the currently presented content 50 corresponding to the item "SPORTS INFORMATION" is displayed along with the preview content 52a corresponding to the focused item "WEATHER INFORMATION" among the content items displayed in the currently presented content 50. In addition to them, the contents corresponding to the "NEWS" button and the "GOURMET INFORMATION" button respectively located before and after the item "WEATHER INFORMATION" are also displayed in split screen form as preview content 52b and preview content 52c, respectively. According to such preview content display, the user can precheck the details of a plurality of contents by a simple operation and can thus start the viewing of the desired content quickly.

In the present embodiment, the content corresponding to the currently focused item has been displayed in split screen form along with the contents corresponding to the items located above and below the focused item, but the invention is not limited to this particular arrangement; for example, the content corresponding to the currently focused item may be displayed in split screen form along with the contents corresponding to the items positionally preceding and following the focused item. Here, the contents to be displayed are not limited to one each before and after the currently focused item, but more than one content before and after it may be displayed.
In an alternative embodiment, the contents corresponding to the items preceding and following the focused item by more than one item may be displayed.

Further, when the focus is placed over the item located at an end of the content list, the contents corresponding to the items positionally preceding and following the focused item are displayed as preview contents. For example, in Figure 7, when the item "NEWS" is focused, "NEWS" and "WEATHER INFORMATION" are displayed as preview contents.

In the present embodiment, the image display area of the data broadcast screen shows a moving image (live TV program), but instead, a still image may be displayed here.

In the present invention, the same image need not be displayed in the preview content 52 as in the currently presented content 50, but instead, the destination content image of the currently previewed content may be displayed. If the same image is displayed in the preview content 52 as in the currently presented content 50, the invention can serve the needs of the user who wants to view a live TV program while viewing various data broadcasts. On the other hand, if the destination content image of the currently previewed content is displayed in the preview content 52, the user can check the preview content in further detail.

As described above, according to the present invention, a digital broadcast receiving apparatus can be provided that presents the details of a plurality of contents for viewing before the user performs a content switching (determining) operation, and thereby enables the user to precheck the details of the plurality of contents by a simple operation and to start the viewing of the desired content quickly.

## Claims

1. A receiving apparatus comprising:
a display for displaying content by receiving data broadcast;
a list displaying section for displaying content items in the form of a list;
a preview displaying section for displaying preview content on a screen on which said content is displayed;
a preview switching section for switching the display of said preview content to destination content associated with an item selected by a pointer as said pointer is moved over said content items; and
a display control section for displaying a preview of destination content associated with an item located near the item selected by said pointer.

2. The receiving apparatus according to claim 1, wherein said preview displaying section displays said content and said preview content simultaneously.

3. The receiving apparatus according to claim 2, wherein said display control section displays a preview of destination content associated with an item located adjacent to the item selected by said pointer.

4. The receiving apparatus according to claim 1, wherein said preview switching section switches the display of said preview content after a predetermined time has elapsed after the movement of said pointer is detected.

5. The receiving apparatus according to claim 1, further comprising:
a storing section for storing URI of said preview content;
a reading section for reading out said stored URI; and
a switching section for switching the display of said content to the content that matches said readout URI.

6. The receiving apparatus according to claim 1, wherein said preview switching section performs automatic preview control in which said pointer is automatically moved over an entire movable range of said pointer and the display of said preview content is automatically switched from one content to another in synchronism with said automatic movement of said pointer.

7. The receiving apparatus according to claim 5, wherein when a button for switching the display of said content without moving said pointer is provided, said preview switching section in said automatic preview control switches the display of said preview content from one content to another including the destination content to be effected by operating said button.

8. The receiving apparatus according to claim 5, further comprising switching section for switching the display of said content to current preview content as the display of said preview content is switched from one content to another.

9. A display method comprising the steps of:
displaying content by receiving data broadcast;
displaying content items in the form of a list;
displaying preview content on a screen on which said content is displayed;
switching the display of said preview content to destination content associated with an item selected by a pointer as said pointer is moved over said content items; and
displaying a preview of destination content associated with an item located near the item selected by said pointer.
